## Europäisches Patentamt

## European Patent Office

## Office européen des brevets

(19)

(11) Veröffentlichungsnummer: **0 062 166**
A2

(12) **EUROPÄISCHE PATENTANMELDUNG**

(21) Anmeldenummer: **82101700.1**

(22) Anmeldetag: **04.03.82**

(51) Int. Cl.³: **G 01 D 11/24, G 12 B 9/02**

(30) Priorität: **30.03.81 DE 3112591**

(43) Veröffentlichungstag der Anmeldung: **13.10.82**
**Patentblatt 82/41**

(84) Benannte Vertragsstaaten: **AT BE CH DE FR GB IT LI NL SE**

(71) Anmelder: **Nixdorf Computer Aktiengesellschaft, Fürstenallee 7, D-4790 Paderborn (DE)**

(72) Erfinder: **Schmeykal, Rudolf, Bek'scher Berg 17, D-4791 Neuenbeken (DE)**
Erfinder: **Döinghaus, Hermann, Friedhofsweg 30, D-4795 Delbrück (DE)**

(74) Vertreter: **Patentanwälte Schaumburg Schulz-Dörlam & Thoenes, Mauerkircherstrasse 31 Postfach 80 15 60, D-8000 München 80 (DE)**

(54) Schalldämmendes Gerätegehäuse und Verfahren zu dessen Herstellung.

(57) Bei einem schalldämmenden Gerätegehäuse mit einer steifen Außenschale (20) ist diese auf ihrer Innenseite mit einer zusammenhängenden Dämmschicht (22) aus einem an der Außenschale (20) haftenden elastischen Kunststoffschaum ausgekleidet, in dem auch die Halterungselemente (32, 26) zur Verbindung zwischen der Außenschale (20) und dem von ihr umschlossenen Gerät (16) mindestens teilweise eingebettet sind, so daß Schallbrücken zwischen dem Gehäuseinnenraum und der Außenschale (20) soweit wie möglich vermieden werden. In die Dämmschicht können Abschirmungen (52, 54) und Kabelführungen (56, 58; 62, 64) eingebettet sein. Die Schalldämmschicht (22) wird in der Weise hergestellt, daß in die als Außenform dienende Außenschale (20) eine Innenform eingesetzt und der Zwischenraum zwischen Innenform und Außenschale (20) mit dem Kunststoffmaterial ausgeschäumt wird.

## Schalldämmendes Gerätegehäuse und Verfahren zu dessen Herstellung

Die Erfindung betrifft ein schalldämmendes Gerätegehäuse mit einer starren Außenschale, an deren Innenseite schalldämmendes Material angeordnet ist.

Zur Schalldämmung von derartigen Gerätegehäuse ist es bisher bekannt, auf die Innenseite der Außenschale ein schalldämmendes Material aufzukleben. Diese Art der Auskleidung ist nicht nur arbeitsaufwendig und schwierig, sondern sie erfüllt hinsichtlich der Schalldämmung auch nicht die gestellten Anforderungen, da einerseits eine genaue Anpassung an die Gehäuseinnenform nicht immer möglich ist und andererseits die Eckbereiche des Gehäuses vielfach nicht mit schalldämmendem Material ausgekleidet werden können, so daß immer noch Schallbrücken vorhanden sind.

Der Erfindung liegt die Aufgabe zugrunde, ein schalldämmendes Gehäuse der eingangs genannten Art anzugeben, das einfach und preisgünstig herzustellen ist und erheblich verbesserte Schalldämmqualitäten besitzt. Diese Aufgabe wird erfindungsgemäß dadurch gelöst, daß die Außenschale auf ihrer Innenseite mit einer zusammenhängenden Dämmschicht aus einem elastischem Kunststoffschaum ausgekleidet ist. Eine derartige Dämmschicht kann erfindungsgemäß in einfacher Weise dadurch hergestellt werden, daß in die als Außenform dienende Außenschale eine Innenform eingesetzt wird und daß der Zwischenraum zwischen der Außenschale und der Innenform mit einem an der Außenschale haftenden elastischen Kunststoffschaum ausgeschäumt wird.

Durch die erfindungsgemäße Dämmschicht wird die Außenschale auf ihrer gesamten Innenseite abgedeckt, so daß
keine Schallbrücken zurück bleiben. Unabhängig von
der Innenkontur der Außenschale kann dabei die Dämmschicht mit einem geringen Arbeitsaufwand aufgebracht werden.

Um einen größeren Frequenzbereich abzuschirmen, kann
die Dämmschicht aus einer Mehrzahl von Kunststoffschaumschichten unterschiedlicher Dichte bestehen,
deren jede in einem bestimmten Frequenzbereich besonders gute Schalldämmeigenschaften besitzt. Zur
Dämpfung des Körperschalles kann dabei zusätzlich
eine Schicht aus einem Material hohen spezifischen
Gewichtes in die Dämmschicht eingebettet oder an
der Innenseite der Außenschale befestigt werden.

Ohne Erhöhung des Arbeitsaufwandes kann die Dämmschicht
auf ihrer Innenseite mit einem schallschluckenden Profil versehen werden. Durch eine geeignete Wahl der
Profilquerschnitte bzw. Profilzwischenräume entsprechend
den auftretenden Schallwellenlängen kann dabei eine
gesteigerte Absorption des Schalles in bestimmten Frequenzbereichen erreicht werden. Ein solches Profil
kann Rippen, Vertiefungen oder Kegelstrukturen oder
beispielsweise eine Kombination derartiger Formen
aufweisen.

Über die bereits genannten Vorteile hinaus hat die
erfindungsgemäße Dämmschicht auch eine klimatisierende
Wirkung, da sie den Wärmeaustausch zwischen dem Gehäuse-

- 3 -

innenraum und dem Gehäuseaußenraum erschwert.

Mit dem erfindungsgemäßen Verfahren ist es ohne Mühe möglich, die Dämmschicht so auszubilden, daß sie eine der Kontur des aufzunehmenden Gerätes oder eines Teiles desselben angepaßte Innenoberfläche aufweist. Dadurch läßt sich der vorhandene Zwischenraum zwischen dem Gerät und dem Gerätegehäuse optimal für die Geräuschdämpfung nutzen.

Bei einem mehrteiligen Gerätegehäuse ist es zur Abdichtung zwischen den einzelnen Gehäuseteilen zweckmäßig, wenn in jeweils einer von zwei zur Anlage aneinander bestimmten Stoßflächen der Dämmschicht eine Nut und in der jeweils anderen Stoßfläche eine in die Nut eingreifende Feder ausgebildet ist.

Falls es erforderlich ist, kann in die Dämmschicht eine elektrische Abschirmung wie beispielsweise ein Gitter oder Lochblech eingebettet sein. Letzteres kann auch gleichzeitig als Schalldämmelement verwendet werden.

Das Ausschäumen der Außenschale mit der Dämmschicht bietet die Möglichkeit, in der Dämmschicht Kabelführungen auszubilden. Die Kabelführungen können dabei mit Hilfe von in die Dämmschicht eingebetteten Profilen gebildet werden; es besteht jedoch auch die Möglichkeit, die Kabelführungen in Form von Führungsnuten auszubilden, die zur Gehäuseinnenseite hin offen sind und welche die Kabel eingedrückt werden.

Üblicherweise sind in einem solchen Gerätegehäuse Ein-und Austrittsöffnungen wie Lüftungsschlitze oder dergleichen ausgebildet. Das erfindungsgemäße Verfahren zur Herstellung der Dämmschicht bietet die Möglichkeit, auf einfache Weise einen gewissen Schleuseneffekt an den Ein- undAustrittsöffnungen zu erreichen, in dem die in der Dämmschicht verlaufenden Abschnitte der Ein- und Austrittsöffnungenmindestens auf einem Teil ihrer Länge gegenüber dem in der Außenschale verlaufenden Abschnitt schräg verlaufen. Beispielsweise können die in der Dämmschicht verlaufenden Abschnitte abgekröpft oder geknickt verlaufen, so daß das innere und das äußere Ende der Ein- und Austrittsöffnungen nicht durch eine gerade Linie miteinander verbunden werden können.

Bei einer Belüftung des in dem Gehäuse eingeschlossenen Gerätes können mit dem erfindungsgemäßen Verfahren sehr einfach an der Innenseite der Dämmschicht Luftleitflächen ausgebildet werden, welche den Lüftungsstrom in eine gewünschte Richtung lenken.

Üblicherweise bilden die Verbindungselemente zwischen dem geräuscherzeugenden Gerät und dem Gehäuse Schallbrücken. Die Schallübertragung über die Schallbrücken kann auf ein Minimum dadurch beschränkt werden, daß die Verbindungselemente in die Dämmschicht soweit eingebettet sind, daß nur die mit dem Gerät oder den Geräteteilen unmittelbar in Berührung tretenden Abschnitte aus der Dämmschicht herausragen.

Weitere Merkmale und Vorteile der Erfindung ergeben sich aus der folgenden Beschreibung, welche in Verbindung mit den beigefügten Zeichnungen die Erfindung anhand von Ausführungsbeispielen erläutert. Es zeigen:

Fig. 1    einen schematischen Schnitt durch ein Ge-
          rätegehäuse mit einem darin untergebrach-
          ten Gerät,

Fig. 2    einen Teilschnitt durch eine zweite Ausführungsform der Erfindung, und

Fig. 3    eine schematische Skizze zur Erläuterung
          der Herstellung der Dämmschicht.

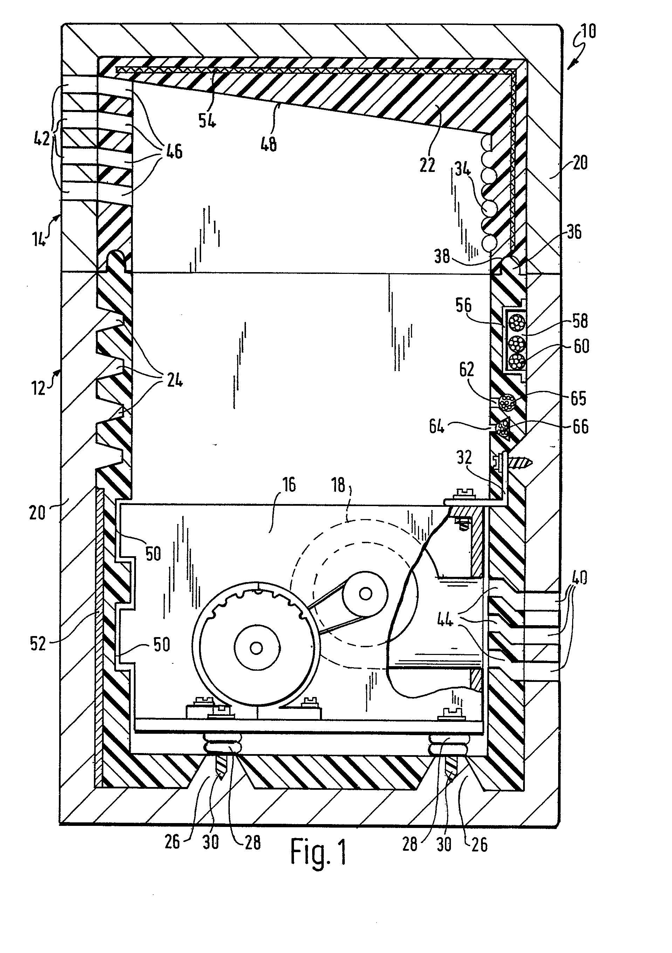

In der Fig. 1 erkennt man ein allgemein mit 10 bezeichnetes Gerätegehäuse mit einem Gehäuseunterteil 12 und einem Gehäuseoberteil 14. In dem Gehäuseunterteil 12 ist ein Gerät 16 angeordnet, das im vorliegeden Beispiel ein Gebläse 18 aufweist. Im übrigen ist
der Aufbau des Gerätes 16 für das Verständnis der
vorliegenden Erfindung nicht wesentlich.

Das Gerätegehäuse 10 umfaßt eine steife Außenschale 20
aus Kunststoff, Metall oder einem anderen geeigneten
Material, die auf ihrer Innenseite mit einer aus Kunststoffschaum bestehenden Dämmschicht 22 vollständig
ausgekleidet ist. Diese Dämmschicht 22 überdeckt somit
die gesamte Innenkontur der Außenschale 20 mit allen
Ecken, Vertiefungen, Hinterschneidungen, so daß an
diesen Stellen keine Schallbrücken gebildet werden
können. Als Beispiel seien hierfür die an der Außenschale 20 des Gehäuseunterteils 12 ausgebildeten Versteifungsrippen 24 genannt. Nur die vom Boden des Gehäuseunterteiles 12 vorstehenden Befestigungsnocken 26,
auf denen das Gerät 16 unter der Zwischenschaltung von Schwingmetallteilen 28 mit Hilfe von Schrauben 30 befestigt ist, sind nur im Bereich ihres Mantels von der Dämmschicht 22 umschlossen, während die Auflagefläche für die Schwingmetallteile 28 unbedeckt bleibt.

Als Schallbrücke wirkt überlicherweise auch ein Befestigungswinkel 32, der mit seinem einen Schenkel an dem Gerät 16 und mit seinem anderen Schenkel an der Außenschale 20 des Gehäuseunterteiles angeschraubt ist. Um auch hier die Schallübertragung auf ein Minimum zu reduzieren, ist der Befestigungswinkel 32 soweit in die Dämmschicht 22 eingebettet, daß nur ein Teil des am Gerät 16 befestigten Schenkels aus der Dämmschicht 22 herausragt.

Um die schallabsorbierende Wirkung der Dämmschicht 22 zu verbessern, kann diese auf ihrer Innenseite mit einer profilierten Oberfläche versehen sein, wie dies in dem Bereich 34 dargestellt ist. Es versteht sich, daß dieses Profil sich über die gesamte Innenoberfläche oder über einen gewünschten Teil der Innenoberfläche der Dämmschicht 22 erstrecken kann. Der Bereich 34 soll lediglich als Beispiel für eine derartigen Oberflächengestaltung gelten.

Zur Abdichtung zwischen dem Gehäuseoberteil 14 und dem Gehäuseunterteil 12 ist an der dem Gehäuseoberteil 14 zugewandten Stoßfläche der Dämmschicht des Gehäuseunterteiles 12 eine Rippe 36 ausgebildet, die in eine komplementäre Nut 38 eingreift, die in der entsprechenden Stoßfläche der Dämmschicht 22 des Oberteiles 14 ausgeformt ist.

Für die Belüftung des Gehäuseinnenraumes mittels des Gebläses 18 sind Lufteintrittsschlitze 40 im unteren Bereich des Gehäuseunterteils 12 und Luftaustrittsschlitze 42 im oberen Bereich des Gehäuseoberteiles 14 ausgebildet. Wie man erkennt, sind die in der Dämmschicht 22 verlaufenden Abschnitte 44 der Lufteintrittsschlitze 40 gekröpft, d.h. in sich abgewinkelt gestaltet. Dadurch wird der Schallaustritt durch die Lufteintrittsschlitze 40 weitgehend vermieden. Das gleiche gilt für die Luftaustrittsschlitze 42, deren in der Dämmschicht 22 verlaufender Abschnitt 46 schräg zu den in der Außenschale 20 verlaufenden Abschnitten gerichtet sind.

Um die von dem Gebläse 18 angesaugte Luft zu den Luftaustrittsschlitzen 42 zu leiten, ist die Dämmschicht 22 im Bereich der Deckfläche des Gehäuseoberteiles 14 mit einer schräg zu den Luftaustrittsschlitzen 42 hin ansteigenden Luftleitfläche 48 versehen. Solche Luftleitflächen können in jeder gewünschten Form an der Dämmschicht 22 vorgesehen sein.

Im Bereich des Gerätes 16 sind in der Dämmschicht 22 Aussparungen 50 ausgebildet, die in ihrer Kontur mit entsprechenden Vorsprüngen an dem Gerät 16 übereinstimmen. Dadurch wird der Zwischenraum zwischen der Außenschale 20 und dem Gerät 16 optimal für die Geräuschdämpfung genutzt. Die Dämmschicht 22 kann in ihrer Innenkontur somit vollständig an die Außenkontur des aufzunehmenden Gerätes angepaßt sein.

In die Dämmschicht 22 lassen sich verschiedene Elemente einbetten, die für die Schallabsoption oder für die spätere Nutzung des Gerätes wesentlich sind. So kann zur besseren Körperschalldämpfung beispielsweise eine Schicht 52 aus einem spezifisch schweren mit Material zwischen der Außenschale 20 und der Dämmschicht 22 vorgesehen sein, wie dies auf der linken Seite der Fig. 1 in Höhe des Gerätes 16 dargestellt ist. Ferner kann eine elektrische Abschirmung in Form eines Gitters oder Lochbleches 54 in die Dämmschicht 22 eingebettet sein, wie dies im Bereich des Gehäuseoberteiles 14 dargestellt ist. Eine elektrische Abschirmung in Form eines Lochbleches hat gleichzeitig eine Schallabsorbierende Funktion. Sowohl die Abschirmung 54 als auch die Schwermaterialschicht 52 können sich selbstverständlich über den gesamten Innenumfang des Gehäuses 10 oder nur über einen bestimmten Teil desselben erstrecken. In der Fig. 1 wurde lediglich jeweils ein Abschnitt als Beispiel dargestellt.

In der Dämmschicht 22 können auch Kabelführungsschächte ausgebildet sein. Eine Möglichkeit zu Ihrer Bildung besteht darin, daß in die Dämmschicht 22 ein rinnenförmiges Profil 56 eingebettet ist, das an seiner offenen Seite von der Außenschale 20 abgeschlossen wird und zusammen mit dieser einen Kabelschacht 58 zum Einschieben von Kabeln 60 bildet. Eine andere Möglichkeit besteht darin, daß in der Dämmschicht 22 eine im Querschnitt pilzförmige Nut 62 oder eine im Querschnitt schwalbenschwanzförmige Nut 64 ausgebildet ist, in die jeweils von der Gehäuseinnenseite her ein Kabel 65 bzw. 66 eingedrückt werden kann, das in der Nut 62 bzw. 64 festgehalten wird.

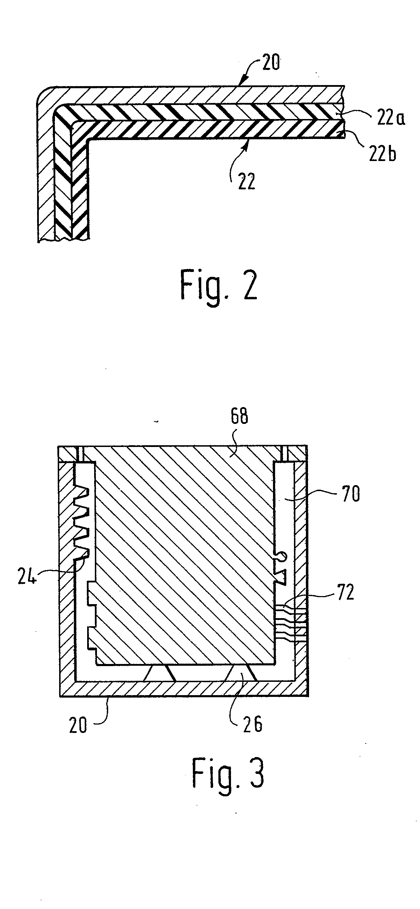

Trotz ihrer komplexen Form kann die Dämmschicht 22 auch auf einfache Weise und kostengünstig hergestellt werden, in dem gemäß Fig. 3 die Außenschale 20 als eine Außenform verwendet wird, in die eine entsprechend gestalte Innenform 68 eingesetzt wird, worauf der Zwischenraum 70 zwischen Außenschale 20 und Innenform 68 mit einem elastischen Kunststoff ausgeschäumt wird, der sich fest mit der Außenschale 20 verbindet. Die Fig. 3 zeigt diesen Vorgang schematisch nur für die Herstellung des Gehäuseunterteiles 12. Die Abschnitte 44 der Lüftungsschlitze 40 werden dabei durch Formstücke 72 erzeugt, die aufgrund der Elastizität des Kunststoffmaterials nach dem Schäumen ohne Mühe aus der Dämmschicht herausgezogen werden können. Die in die Dämmschicht einzubettenden Gegenstände müssen selbstverständlich vorher in dem Zwischenraum 70 angeordnet werden. Die hierzu erforderlichen Techniken sind an sich bekannt und brauchen daher nicht näher erläutert zu werden.

Fig. 2 zeigt noch einen Teilschnitt durch eine weitere Ausführungsform der Erfindung, bei welcher die Dämmschicht 22 aus zwei Teilschichten 22a und 22b aufgebaut ist, die aus Kunststoffmaterial unterschiedlicher Dichte bestehen. Dadurch kann ein größerer Bereich von Schallfrequenzen wirkungsvoll absorbiert werden.

Die vorstehende Beschreibung zeigt, daß mit der erfindungsgemäßen Lösung auf einfachste Weise eine vollständige Abdeckung der Gehäuseinnenwand erreicht wird, so daß alle Schallbrücken vom Gehäuseinnenraum zum Gehäuseaußenraum weitgehend vermieden werden. Somit wird eine optimale Schalldämmung erreicht, wobei es die Herstellung der Dämmschicht aus einem Kunststoffschaum ermöglicht, in der Dämmschicht eine Vielzahl von Einbauteilen einzubetten und Einformungen vorzusehen, die für die spätere Nutzung des Gehäuses wesentlich sind, so daß beim Einbau eines Gerätes in das Gehäuse ein wesentlicher Teil der früher erforderlichen Arbeiten entfällt. Ein weiterer Vorteil der erfindungsgemäßen Lösung ist noch darin zu sehen, daß durch die vollständige Überdeckung der Innenoberfläche der Außenschale keine zu lackierenden Flächen übrig bleiben, die früher unter Aufwand von Material und Arbeitszeit lackiert werden mußten.

0062166

- 11 -

Patentansprüche:

1. Schalldämmendes Gerätegehäuse mit einer steifen Außenschale, an deren Innenseite schalldämmendes Material angeordnet ist, dadurch gekennzeichnet, daß die Außenschale (20) auf ihrer Innenseite mit einer zusammenhängenden Dämmschicht (22) aus einem elastischen Kunststoffschaum ausgekleidet ist.

2. Gerätegehäuse nach Anspruch 1, dadurch gekennzeichnet, daß die Dämmschicht (22) aus einer Mehrzahl von Kunststoffschaumschichten (22a, 22b) unterschiedlicher Dichte besteht.

3. Gerätegehäuse nach Anspruch 1 oder 2, dadurch gekennzeichnet, daß in die Dämmschicht (22) mindestens eine Schicht (52) aus einem Material hohen spezifischen Gewichtes eingebettet ist.

4. Gerätegehäuse nach einem der Ansprüche 1 bis 3, dadurch gekennzeichnet, daß die Dämmschicht (22) auf ihrer Innenseite ein schallabsorbierendes Profil (34) aufweist.

5. Gerätegehäuse nach einem der Ansprüche 1 bis 4, dadurch gekennzeichnet, daß die Dämmschicht (22) eine an die Kontur eines aufzunehmenden Gerätes (16) oder eines Teiles desselben angepaßte Innenoberfläche aufweist.

6. Gerätegehäuse nach einem der Ansprüche 1 bis 5, dadurch gekennzeichnet, daß bei einem mehrteiligen Gerätegehäuse (12, 14) in jeweils einer von zwei zur Anlage aneinander bestimmten Stoßflächen der Dämmschicht eine Nut (38) und in der jeweils anderen Stoßfläche eine in die Nut eingreifende Feder (36) ausgebildet ist.

7. Gerätegehäuse nach einem der Ansprüche 1 bis 6, dadurch gekennzeichnet, daß in die Dämmschicht (22) eine elektrische Abschirmung (54) eingebettet ist.

8. Gerätegehäuse nach einem der Ansprüche 1 bis 7, dadurch gekennzeichnet, daß in der Dämmschicht (22) Kabelführungen (58; 62; 64) ausgebildet sind.

9. Gerätegehäuse nach Anspruch 8, dadurch gekennzeichnet, daß die Kabelführungen (58) mit Hilfe von in die Dämmschicht (22) eingebetten Profilen (56) gebildet sind.

10. Gerätegehäuse nach Anspruch 8, dadurch gekennzeichnet, daß die Kabelführungen von zur Gehäuseinnenseite hin offenen Kalbeführungsnuten (62; 64) gebildet sind.

11. Gerätegehäuse nach einem der Ansprüche 1 bis 10, dadurch gekennzeichnet, daß die Verbindungselemente (26, 32), die zur Verbindung des Gehäuses (10) mit dem Gerät (16) oder Geräteteilen dienen, an der Außenschale (20) befestigt und in die Dämmschicht (22) soweit eingebettet sind, daß nur die mit dem Gerät (16) oder den Geräteteilen unmittelbar in Berührung tretenden Abschnitte aus der Dämmschicht (22) herausragen.

12. Gerätegehäuse nach einem der Ansprüche 1 bis 11, wobei in dem Gehäuse Ein- und Austrittsöffnungen wie Lüftungsschlitze und dergleichen ausgebildet sind, dadurch gekennzeichnet, daß die in der Dämmschicht (22) verlaufenden Abschnitte (44, 46) der Ein- und Austrittsöffnungen mindestens auf einem Teil ihrer Länge gegenüber dem jeweiligen in der Außenschale (20) verlaufenden Abschnitt schräg verlaufen.

13. Gerätegehäuse nach einem der Ansprüche 1 bis 12, dadurch gekennzeichnet, daß an der Innenseite der Dämmschicht (22) Luftleitflächen (48) ausgebildet sind.

14. Verfahren zur Herstellung eines schalldämmenden Gerätegehäuses nach einem der Ansprüche 1 bis 13, dadurch gekennzeichnet, daß in die als Außenform dienende Außenschale (20) eine Innenform (68) eingesetzt wird und daß der Zwischenraum (70) zwischen der Außenschale (20) und der Innenform (68) mit einem an der Außenschale (20) haftenden elastischen Kunststoffschaum ausgeschäumt wird.

15. Verfahren nach Anspruch 14, dadurch gekennzeichnet, daß die in der Dämmschicht (22) einzubettenden Elemente (56; 32; 54; 52) vor dem Ausschäumen in dem Zwischenraum zwischen der Innenform (68) und der Außenschale (20) angeordnet und/oder an der Innenseite der Außenschale (20) befestigt werden.

Fig. 1

Fig. 2

Fig. 3